# EUROPEAN PATENT APPLICATION

(11) **EP 2 653 735 A2**
(43) Date of publication of application: **23.10.2013**
(21) Application number: 13156803.2
(22) Date of filing: 26.02.2013
(51) Int. Cl.: F16B 5/02, F16B 35/04, H01R 4/30, H01R 9/24, H01R 13/207

(54) **Stud bolt, terminal block, electrical apparatus, and fixing method**

(30) Priority: 19.04.2012 JP 2012096075
(71) Applicant: Kabushiki Kaisha Yaskawa Denki, Kitakyushu-Shi Fukuoka 806 (JP)
(72) Inventor: Kojyo, Makoto, Kitakyushu-shi, Fukuoka 806-0004 (JP)
(74) Representative: Grünecker, Kinkeldey, Stockmair & Schwanhäusser

(57) **Abstract**

A stud bolt (1) according to the embodiments includes a first male screw portion (11) and a second male screw portion (12) on both sides, respectively. The second male screw portion (12) has an outer diameter different from that of the first male screw portion (11), and a first recessed portion (14) is formed in an end portion of the second male screw portion (12).

## Description

### FIELD

The embodiments discussed herein are directed to a stud bolt, a terminal block, an electrical apparatus, and a fixing method.

### BACKGROUND

Conventionally, electric wires or the like are connected to a terminal block via solderless terminals. A solderless terminal is, for example, a terminal that includes an electric wire connecting portion, which is connected to an electric wire, on one end side and a ringshaped or U-shaped inserting portion on the other side. When the solderless terminal is connected to the terminal block, typically, the solderless terminal is fixed by fastening a male screw, which is inserted into the inserting portion of the solderless terminal, to the screw hole provided in the terminal plate of the terminal block.

For example, Japanese Patent Application Laid-open H08-31482 is included as a literature related to the above conventional technology.

However, in the above-described conventional example, for example, when an electric wire of a different size, for example, different thickness, is connected to the terminal block, the size of the solderless terminal needs to be changed according to the size of the electric wire. However, the size of the inserting portion of the solderless terminal is often different according to the size of the electric wire. Therefore, the above-described male screw may not be able to be inserted into the inserting portion of the solderless terminal.

Therefore, it is necessary to prepare another terminal block corresponding to the electric wire of a different size, which is not desirable in terms of the cost. In other words, it is preferable that the existing terminal block can be used also for the electric wire of a different size.

An aspect of the embodiments is to provide a stud bolt, a terminal block, an electrical apparatus, and a fixing method, with which the electric wire of a different size can be securely fixed without increasing the cost.

### SUMMARY

A stud bolt according to the embodiments includes a first male screw portion and a second male screw portion on both sides, respectively. The second male screw portion has an outer diameter different from that of the first male screw portion, and a first recessed portion is formed in an end portion of the second male screw portion.

According to an aspect of the embodiments, it is possible to provide a stud bolt, a terminal block, an electrical apparatus, and a fixing method, with which the electric wire of a different size can be securely fixed without increasing the cost.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:

FIG. 1 is an explanatory diagram illustrating a stud bolt according to a first embodiment;

FIG. 2 is an explanatory diagram illustrating the usage state of the stud bolt;

FIG. 3 and FIG. 4 are explanatory diagrams illustrating an example of the attached state of the stud bolt to a terminal block;

FIG. 5 is an explanatory diagram illustrating a usage example of the stud bolt;

FIG. 6A is an explanatory diagram illustrating a stud bolt according to a modification;

FIG. 6B is an explanatory diagram illustrating the usage state of the stud bolt according to the modification;

FIG. 7 is an explanatory diagram of a terminal block according to a second embodiment; and

FIG. 8 is an explanatory diagram illustrating an electrical apparatus that includes the terminal block.

### DESCRIPTION OF EMBODIMENTS

Hereinafter, embodiments of a stud bolt, a terminal block, an electrical apparatus, and a fixing method disclosed in the present application will be described in detail with reference to the accompanying drawings. The present invention is not limited to the exemplifications in the following embodiments.

### (First Embodiment)

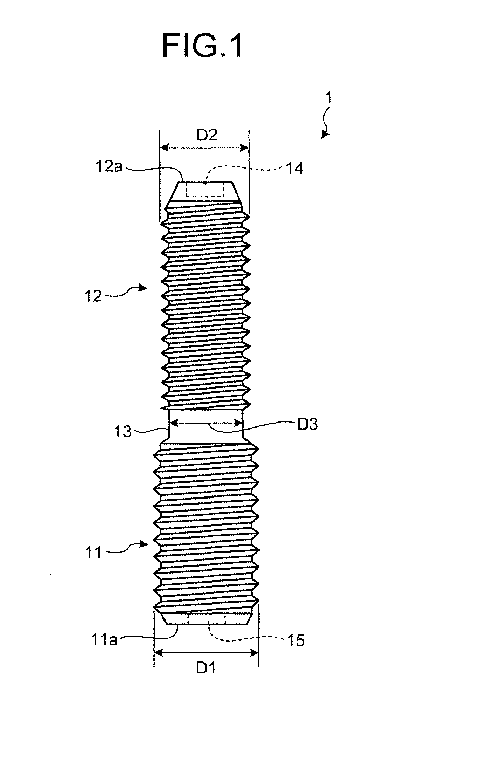

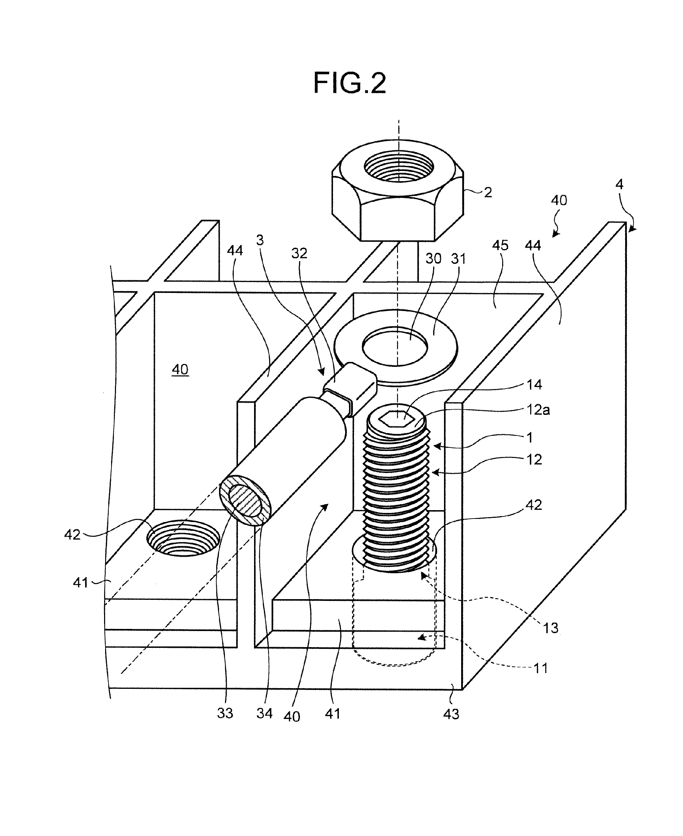

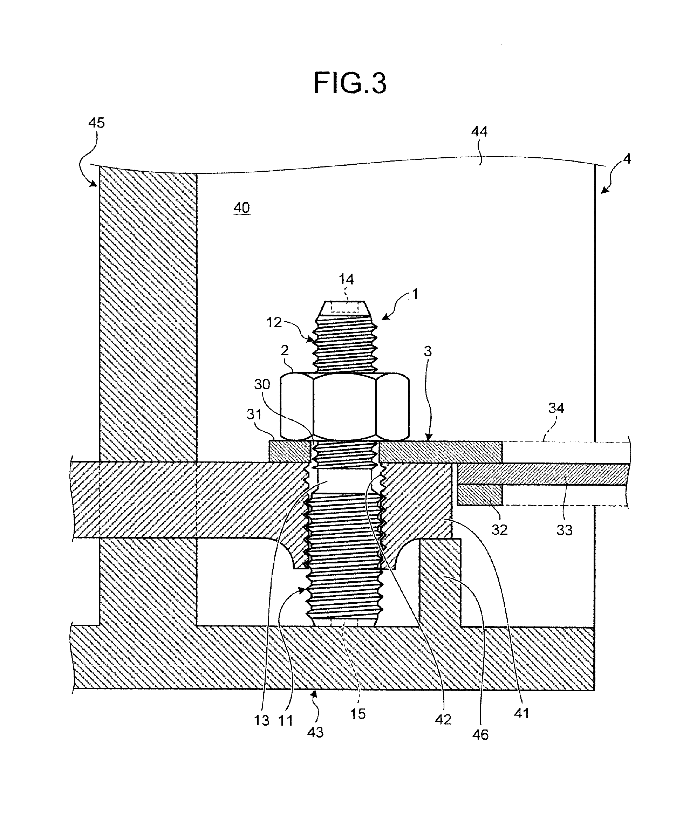

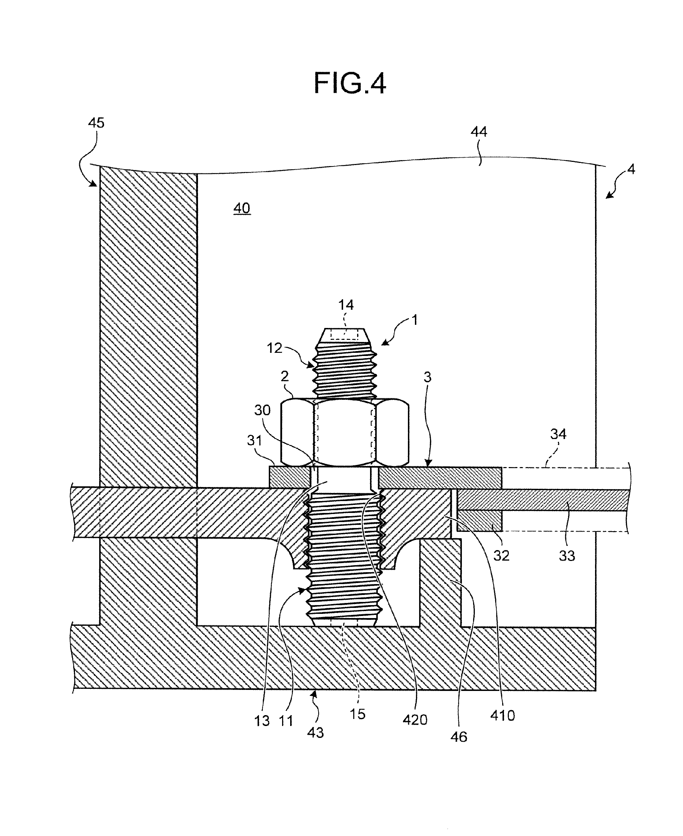

FIG. 1 is an explanatory diagram illustrating a stud bolt 1 according to the first embodiment, FIG. 2 is an explanatory diagram illustrating the usage state of the stud bolt 1, and FIG. 3 and FIG. 4 are explanatory diagrams illustrating an example of the attached state of the stud bolt 1 to a terminal block 4. First, the configuration of the stud bolt 1 according to the present embodiment will be described with reference to FIG. 1.

As illustrated in FIG. 1, the stud bolt 1 according to the present embodiment includes a first male screw portion 11 formed on one end side of the shaft body and a second male screw portion 12 formed on the other end side of the shaft body.

The first male screw portion 11 and the second male screw portion 12 have outer diameters different from each other. For example, as illustrated in FIG. 2, the stud bolt 1 is detachably attached to a screw hole 42 in a terminal plate 41, which is provided in the terminal block 4, at the first male screw portion 11 that has a relatively large diameter. On the other hand, a terminal, for example, a solderless terminal 3 is attached to the second male screw portion 12 that has a relatively small diameter and a nut 2 is detachably attached to the second male screw portion 12. The nut 2 is a fastening member that fixes the solderless terminal 3 by pressing the solderless terminal 3 against the terminal plate 41 side.

Moreover, as illustrated in FIG. 1, a narrowed portion 13, which has a diameter smaller than those of the first male screw portion 11 and the second male screw portion 12, is formed between the first male screw portion 11 and the second male screw portion 12.

In other words, the shaft body of the stud bolt 1 includes the first male screw portion 11 having a first shaft diameter D1 that is the maximum diameter, the second male screw portion 12 having a second shaft diameter D2 smaller than that of the first male screw portion 11, and the narrowed portion 13 having a third shaft diameter D3 that is the minimum diameter. Specifically, the first to third shaft diameters D1 to D3 of the shaft body of the stud bolt 1 according to the present embodiment satisfy the relationship D1>D2>D3.

Moreover, as illustrated in FIG. 1 and FIG. 2, in an end portion 12a of the second male screw portion 12, a first recessed portion 14 is formed. The first recessed portion 14 has a shape such that a fastening tool (not shown) used when fastening the first male screw portion 11 to the screw hole 42 is inserted thereinto. The fastening tool, which is not specifically limited, is, for example, a hex wrench. When a hex wrench is used, the first recessed portion 14 is, of course, a hole having a hexagonal shape in transverse cross-section.

The stud bolt 1 according to the present embodiment has a configuration as described above. Therefore, a plurality of types of the solderless terminals 3 can be securely fixed to the terminal block 4 by preparing a plurality of types of the stud bolts 1 having different second shaft diameters D2 in the second male screw portion 12, into which the solderless terminal 3 is inserted.

The solderless terminal 3 to be connected to the stud bolt 1 according to the present embodiment will be explained. As illustrated in FIG. 2 and FIG. 3, the solderless terminal 3 includes a terminal body 31 obtained by forming a metal material into a ring shape. An inserting portion 30 for inserting the solderless terminal 3 into the stud bolt 1 is formed in the terminal body 31. Moreover, an electric wire caulking portion 32 is formed in the terminal body 31 and a bare wire portion at the tip of an electric wire 33 is inserted into the electric wire caulking portion 32. Then, the electric wire caulking portion 32 is pressed by a not-shown caulking tool and thus the electric wire caulking portion 32 is crimped to the bare wire portion, whereby the electric wire 33 is connected to the terminal body 31. The electric wire 33 is covered with a cover member 34 made of an insulating material.

Next, the terminal connection structure using the stud bolt 1 described above will be described while describing the configuration of the terminal block 4.

As illustrated in FIG. 2 and FIG. 3, the terminal block 4 has a plurality of spaces each partitioned by a bottom wall 43 and a peripheral wall portion provided to surround the bottom wall 43. The peripheral wall portion is composed of side walls 44 and 44 vertically provided on the right and left sides of the bottom wall 43 and a back wall 45 that connects the side walls 44 and 44. Moreover, the bottom wall 43, the side wall 44, and the back wall 45 are each made of an insulating material, such as synthetic resin, and the space surrounded by these walls forms an insulated space 40. The terminal block 4 according to the present embodiment is such that the back wall 45 extends in the longitudinal direction and the side walls 44 are provided at predetermined intervals so as to extend across the back wall 45; therefore, a pair of the insulated spaces 40 is formed at symmetrical positions with respect to the back wall 45.

Moreover, as illustrated in FIG. 3, the conductive metal terminal plate 41 is provided so as to extend between a pair of the insulated spaces 40. The screw hole 42 corresponding to the first male screw portion 11 of the stud bolt 1 is formed substantially in the center of the terminal plate 41 and the first male screw portion 11 of the stud bolt 1 is attached to the screw hole 42. In other words, in this embodiment, the first male screw portion 11 functions as a screwing portion that screws the stud bolt 1 into the terminal block 4. When the first male screw portion 11 is attached to the screw hole 42, a fastening tool, such as a hex wrench, described above is used.

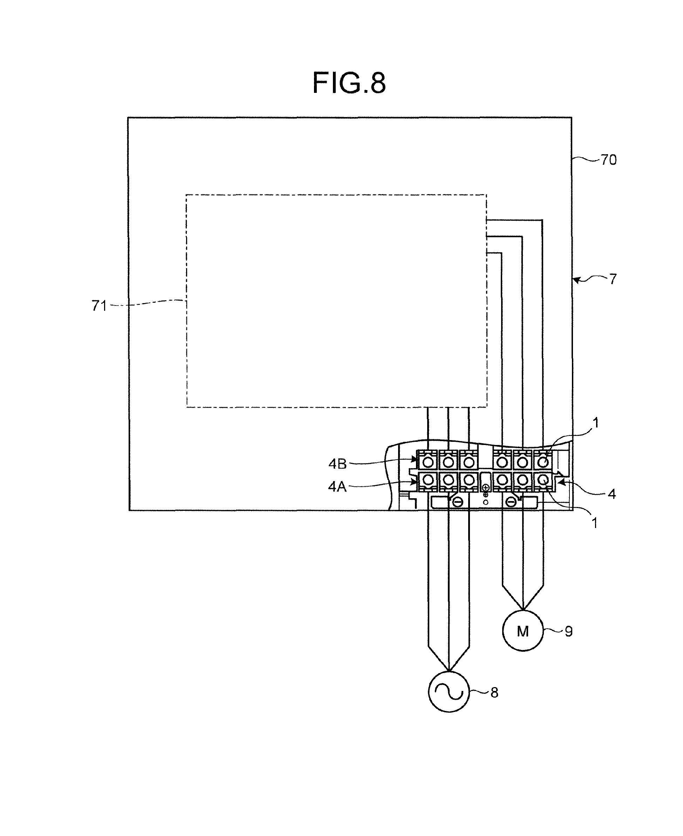

The terminal plate 41 is provided to extend through the back wall 45 in a state where the end portion thereof is supported by a terminal plate supporting wall 46 vertically provided on the bottom wall 43 in the insulated space 40. Therefore, a pair of the insulated spaces 40 that face each other with the back wall 45 therebetween electrically communicate with each other. Thus, in the terminal block 4 according to the present embodiment, an external connection terminal portion, to which the stud bolt 1 for external connection is attached, is included in one insulated space 40. Moreover, an internal connection terminal portion, to which the stud bolt 1 for internal connection, which electrically communicates with the stud bolt 1 for external connection, is attached, is included in the other insulated space 40 (see FIG. 8).

The stud bolt 1 is attached to the terminal plate 41 is such that the second male screw portion 12 is exposed to the insulated space 40. The second shaft diameter D2 of the second male screw portion 12 corresponds to the internal diameter of the inserting portion 30 of the solderless terminal 3 and the solderless terminal 3 is attached to the stud bolt 1 from above (see FIG. 2).

Then, the nut 2 is tightened on the stud bolt 1 from above toward the terminal plate 41. Therefore, the second male screw portion 12 holds the solderless terminal 3 such that the solderless terminal 3 is closely in contact with the terminal plate 41 via the nut 2. In other words, in this embodiment, the second male screw portion 12 functions as a holding portion that holds the solderless terminal 3. In this manner, the terminal connection structure is realized in which the terminal body 31 of the solderless terminal 3 is securely in contact with the terminal plate 41. In order to increase the adhesion between the solderless terminal 3 and the terminal plate 41, a not-shown washer may be attached between the nut 2 and the terminal body 31.

In the above explanation, the stud bolt 1, in which the shaft diameter of the second male screw portion 12 is larger than the shaft diameter of the first male screw portion 11, is illustrated as an example; however, the stud bolt 1 may be such that the shaft diameter of the first male screw portion 11 is larger than the shaft diameter of the second male screw portion 12.

In this manner, in the present embodiment, the stud bolt 1, which is replaceable and in which the shaft diameters of the both male screw portions are different from each other, is used; therefore, the size of the solderless terminal 3, which can be fixed to the terminal block 4, is not limited by the size of the screw hole 42 of the terminal plate 41. In other words, when the size of the solderless terminal 3 is changed, it is sufficient to change the stud bolt 1 to the one that corresponds to the solderless terminal 3 the size of which is changed; therefore, it is not necessary to prepare another terminal block 4, which is advantageous in terms of cost.

Moreover, because the stud bolt 1 can be replaced in the insulated space 40, the terminal connection structure can always keep the insulated environment and thus it is not necessary to take additional insulation measures or the like.

The stud bolt 1 according to the present embodiment includes the narrowed portion 13 having the third shaft diameter D3 that is the minimum diameter. When the stud bolt 1 is attached to the terminal plate 41, if the stud bolt 1 is attached to the terminal plate 41 to the extent that the narrowed portion 13 is slightly exposed from the screw hole 42 or until the narrowed portion 13 enters the terminal plate 41, the solderless terminal 3 can be securely pressed and fixed by the nut 2. In other words, the narrowed portion 13 provides an indication of the amount of screwing of the stud bolt 1.

For example, as illustrated in FIG. 3, if the narrowed portion 13 enters the screw hole 42 of the terminal plate 41, the solderless terminal 3 attached to the second male screw portion 12 comes into contact with the surface of the terminal plate 41. Therefore, the solderless terminal 3 is fixed to the terminal plate 41 by a sufficient fastening force applied by the nut 2. As illustrated in FIG. 4, even if the narrowed portion 13 is exposed from a terminal plate 410, the nut 2 can be screwed onto the second male screw portion 12 up to the position at which the solderless terminal 3 can be sufficiently pressed. Thus, even in this case, the solderless terminal 3 can be fixed to the terminal plate 410 by a sufficient fastening force.

In this manner, the stud bolt 1 according to the present embodiment includes the narrowed portion 13, whose diameter is smaller than at least the second male screw portion 12 and into which the solderless terminal 3 can be securely inserted, between the first male screw portion 11 and the second male screw portion 12. Consequently, the terminal body 31 can be securely pressed against the terminal plate 41, 410 by the nut 2 by screwing the stud bolt 1 into the screw hole 42 with the narrowed portion 13 as a mark; therefore, the solderless terminal 3 and the terminal plate 41, 410 can be securely connected to each other.

The length of the narrowed portion 13 in the axis direction can be appropriately designed in consideration of the thickness of the nut 2 to be used, the thickness of the terminal body 31 of the solderless terminal 3, and the like. The thickness of the terminal body 31 is typically 0.5 mm to 4.5 mm.

Moreover, in the stud bolt 1 according to the present embodiment, a second recessed portion 15 is formed in an end portion 11a of the first male screw portion 11. The second recessed portion 15 is for inserting a fastening tool (not shown) used for screwing the second male screw portion 12 into a screw hole 420.

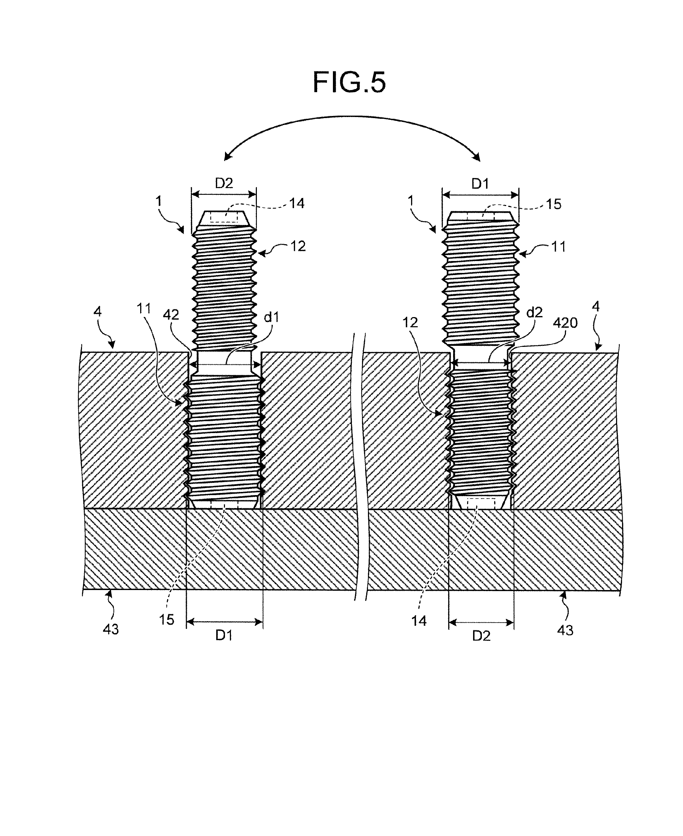

FIG. 5 is an explanatory diagram illustrating a usage example of the stud bolt 1 according to the present embodiment. The stud bolt 1 according to the present embodiment includes the second recessed portion 15. The first male screw portion 11 and the second male screw portion 12 can switch its function between functioning as a screwing portion for screwing the stud bolt 1 itself into the terminal block 4 and functioning as a holding portion for holding the solderless terminal 3 in a state where the solderless terminal 3 is in close contact with the terminal plate 41 via the nut 2.

For example, as illustrated in FIG. 5, if the terminal block 4, in which the screw hole 420 having a different diameter is formed, is additionally prepared, the stud bolt 1 can be used not only for the electric wire 33 corresponding to the second male screw portion 12 but also for the slightly thick electric wire 33, for which the solderless terminal 3 in which the terminal body 31 and the inserting portion 30 are large is used. It is also possible to provide a plurality of screw holes 42, 420 having different diameters, for example, in the same terminal block 4 instead of preparing another terminal block 4.

In the example illustrated in FIG. 5, a diameter d1 of the screw hole 42 corresponds to the first shaft diameter D1 of the first male screw portion 11 of the stud bolt 1 and a diameter d2 of the screw hole 420 corresponds to the second shaft diameter D2 of the second male screw portion 12 of the stud bolt 1. In this manner, the stud bolt 1 according to the present embodiment as a single stud bolt can be used for two types of the solderless terminals 3 (electric wires 33) having different diameters by turning it upside down. Thus, the cost-effective stud bolt 1 can be realized.

In this example, only the single stud bolt 1 is used for two types of the solderless terminals 3 (electric wires 33) having different diameters, and, as described above, if a plurality of the second male screw portions 12, into which the solderless terminal 3 is inserted, with different second shaft diameters D2 is prepared, it is possible to use it easily with a greater variety of the solderless terminals 3.

### (Modification)

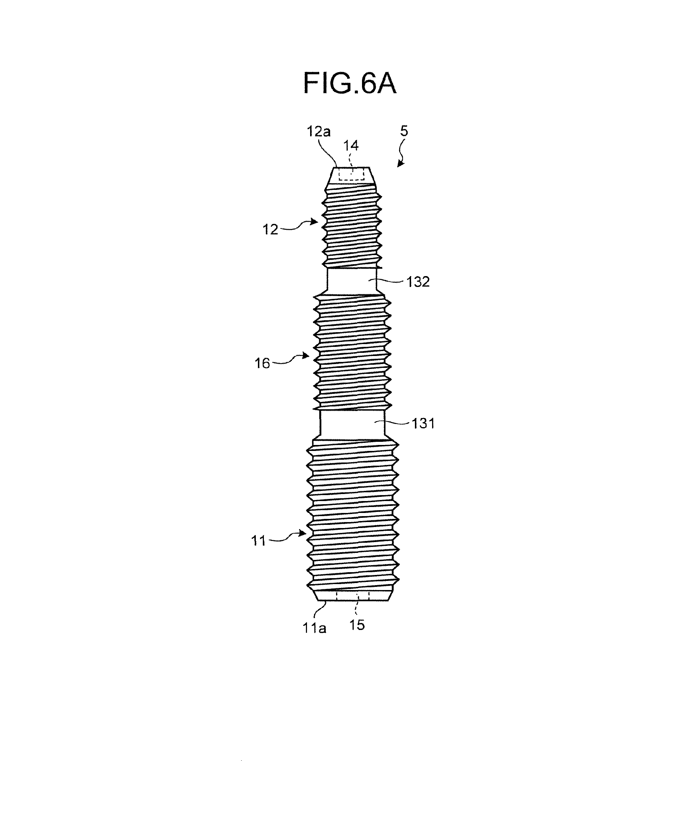

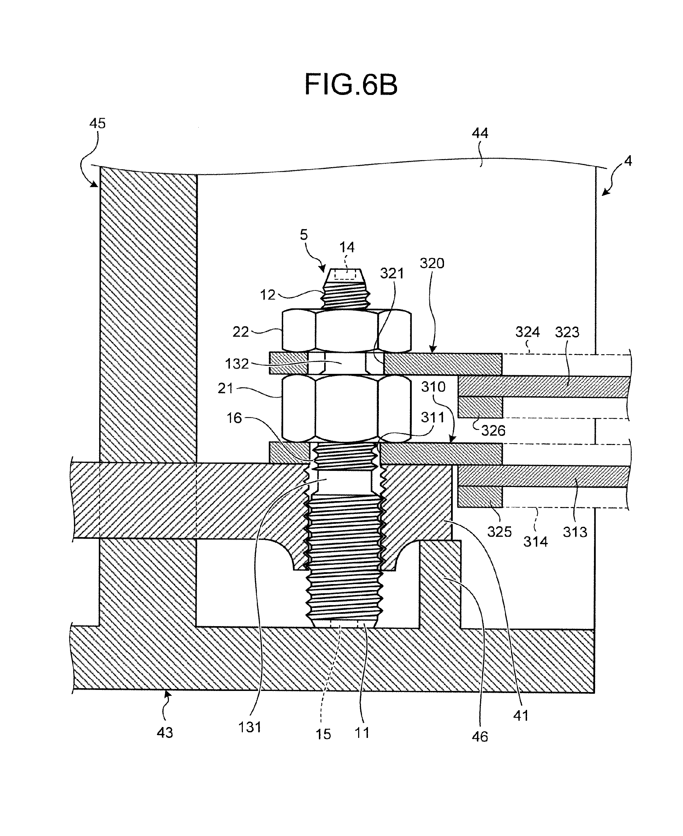

FIG. 6A is an explanatory diagram illustrating a stud bolt 5 according to the modification and FIG. 6B is an explanatory diagram illustrating the usage state of the stud bolt 5 according to the modification. The stud bolt 5 according to the modification illustrated in FIG. 6A and FIG. 6B is different from the stud bolt 1 described above in that the stud bolt 5 includes a third male screw portion 16 as illustrated in FIG. 6A.

Specifically, in the stud bolt 5, the third male screw portion 16 is formed between the first male screw portion 11 formed on one end side of the shaft body and the second male screw portion 12 formed on the other end side of the shaft body. The shaft diameter of the third male screw portion 16 is different from those of the first male screw portion 11 and the second male screw portion 12. A first narrowed portion 131 is formed between the first male screw portion 11 and the third male screw portion 16 and a second narrowed portion 132 is formed between the third male screw portion 16 and the second male screw portion 12. The first and second narrowed portions 131 and 132 also have a function similar to that of the narrowed portion 13 described above.

With the use of the stud bolt 5, as illustrated in FIG. 6B, it is possible to connect two types of electric wires 313 and 323, whose sizes or the like are different from each other, in a stacked manner. In this embodiment, a first solderless terminal 310, which corresponds to the electric wire 313 and has a relatively large insertion hole 311, is connected to the lower side and a second solderless terminal 320, which corresponds to the electric wire 323 and has a relatively small insertion hole 321, is connected to the upper side. In this case, a first nut 21 and a second nut 22, which correspond to the third male screw portion 16 and the second male screw portion 12 having different shaft diameters, respectively, are used. FIG. 6B illustrates cover members 314 and 324 for the electric wires 313 and 323.

### (Second Embodiment)

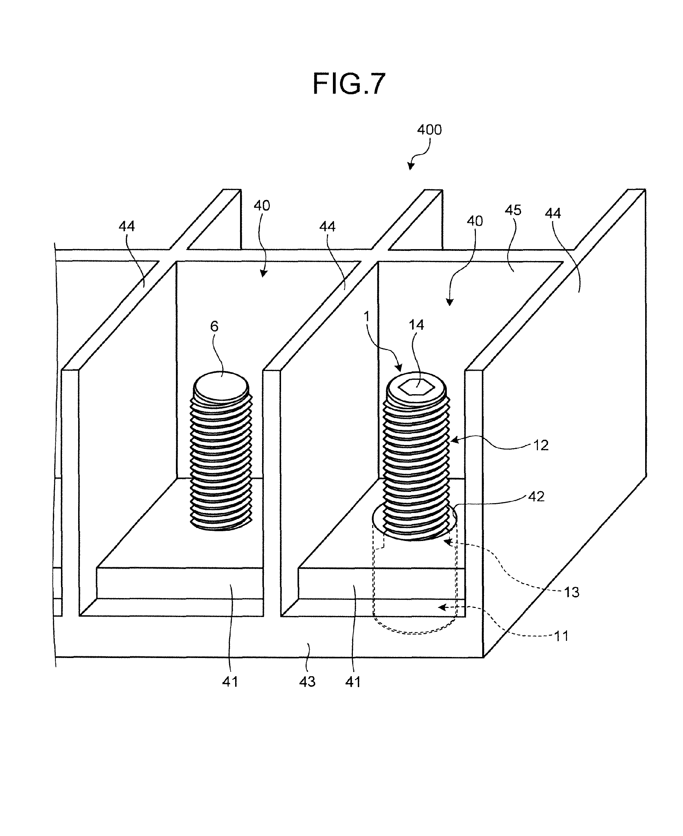

Next, a terminal block 400 according to the second embodiment will be explained with reference to FIG. 7. FIG. 7 is an explanatory diagram of the terminal block 400 according to the second embodiment. In a similar manner to the terminal block 4 according to the embodiment described above, a plurality of the insulated spaces 40 is formed in the terminal block 400 according to the present embodiment. The stud bolt 1 described above can be attached to the terminal block 400 according to the present embodiment and a terminal connection unit 6, which has a predetermined shaft diameter and can connect a predetermined solderless terminal, is provided in a projecting manner in advance in at least one insulated space 40.

In other words, in a certain insulated space 40, the terminal connection unit 6 is provided on the terminal plate 41 in a projecting manner in advance. The terminal connection unit 6 is a male screw that is formed such that a solderless terminal corresponding to a typically used electric wire can be inserted thereinto. On the other hand, in other insulated spaces 40, the stud bolt 1 described above is attached to the screw hole 42 formed in the terminal plate 41. The stud bolt 1 can be replaced at any time. As the terminal connection unit 6 provided in the insulated space 40 in advance, a predetermined screw hole for screwing a typical male screw thereinto may be provided in the terminal plate 41 instead of providing a male screw with no head on the terminal plate 41 in a projecting manner in advance as illustrated in FIG. 7.

According to the terminal block 400 having the above configuration, for example, even if a different electric wire needs to be additionally connected while using a typical electric wire, this can be easily accommodated simply by using the inexpensive stud bolt 1.

An electrical apparatus 7 that includes the stud bolt 1 and the terminal block 4, 400 described above will be described. FIG. 8 is an explanatory diagram of the electrical apparatus 7 that includes the terminal block 4 (400). In FIG. 8, the electrical apparatus 7 is illustrated as a power conversion apparatus. Moreover, examples of the electrical apparatus 7 include various apparatuses in various fields in addition to a breaker, a motor driven by a power conversion apparatus, and the like.

As illustrated in FIG. 8, the power conversion apparatus that is the electrical apparatus 7 includes a power conversion board 71, on which a predetermined electric circuit is formed, in a housing 70, and the terminal block 4 is arranged in the corner portion of the housing 70. Then, the electric circuit of the power conversion board 71 and a three-phase AC power source 8 and a motor 9 are connected to each other via the terminal block 4 and this electric circuit performs supply, demand, or supply and demand for power from the outside. FIG. 8 illustrates an external connection terminal portion 4A and an internal connection terminal portion 4B.

As described above, with the use of the stud bolt 1 and the terminal block 4 according to the present embodiment, even if it is needed to connect an electric wire of a different size, for example, different thickness, this can be accommodated by the inexpensive stud bolt 1. Therefore, it is not necessary to additionally prepare another terminal block 4 and an increase in cost can be suppressed.

In the above-described embodiment, the stud bolt 1 is configured such that the first recessed portion 14 and the second recessed portion 15 are provided; however, it is sufficient to include at least the first recessed portion 14 for screwing the first male screw portion 11 into the screw hole 42 of the terminal plate 41.

Moreover, the total length of the stud bolt 1, or each dimension of the first male screw portion 11, the second male screw portion 12, the narrowed portion 13, and the like can be arbitrary designed. Moreover, the shape, size, and the like of the terminal block 4 can be appropriately designed.

## Claims

1. A stud bolt (1) comprising:
a first male screw portion (11); and
a second male screw portion (12) whose outer diameter is different from that of the first male screw portion (11) and in which a first recessed portion (14) is formed in an end portion, wherein
the first male screw portion (11) and the second male screw portion (12) are provided on both sides of the stud bolt (1), respectively.

2. The stud bolt (1) according to claim 1, wherein the first recessed portion (14) has a shape such that a fastening tool, which is used when the first male screw portion (11) is attached to a screw hole (42) of a terminal block (4, 400), is inserted thereinto.

3. The stud bolt (1) according to claim 2, wherein the second male screw portion (12) has a shape such that a fastening member (2), which is used when a terminal (3) attached to the second male screw portion (12) is fixed to a terminal block (4, 400), is attached thereto.

4. The stud bolt (1) according to any one of claims 1 to 3, wherein a second recessed portion (15) is formed in an end portion of the first male screw portion (11).

5. The stud bolt (1) according to claim 4, wherein the second recessed portion (15) has a shape such that a fastening tool, which is used when the second male screw portion (12) is attached to a screw hole (42) of a terminal block (4, 400), is inserted thereinto.

6. The stud bolt (1) according to any one of claims 1 to 5, further comprising a narrowed portion (13) whose diameter is smaller than those of the first and second male screw portions (11, 12) and that is formed between the first male screw portion (11) and the second male screw portion (12).

7. A terminal block (4, 400) comprising;
the stud bolt (1) according to any one of claims 1 to 6; and
a terminal plate (41, 410), in which a screw hole (42, 420) to which the stud bolt (1) is attached is formed and which is conductive, in an insulated space (40) partitioned by a peripheral wall portion (44, 45) made of an insulating material.

8. The terminal block (4, 400) according to claim 7, wherein an outer diameter of the first male screw portion (11) is larger than an outer diameter of the second male screw portion (12).

9. An electrical apparatus (7) comprising:
the terminal block (4, 400) according to claim 7 or 8; and
an electric circuit that performs supply, demand, or supply and demand for power from an outside via the terminal block (4, 400).

10. A fixing method comprising:
preparing a stud bolt (1) that includes, on both sides thereof, a first male screw portion (11) and a second male screw portion (12) whose outer diameter is different from that of the first male screw portion (11) and in which a first recessed portion (14) is formed in an end portion;
attaching the first male screw portion (11) to a screw hole (42) of a terminal block (4, 400) by a fastening tool inserted into the first recessed portion (14); and
fixing a terminal (3) attached to the second male screw portion (12) to the terminal block (4, 400) by attaching a fastening member (2) to the second male screw portion (12).
